(19) Europäisches Patentamt
European Patent Office
Office européen des brevets

(11) **EP 3 422 450 B1**

(12) **EUROPEAN PATENT SPECIFICATION**

(45) Date of publication and mention
of the grant of the patent:
**05.08.2020 Bulletin 2020/32**

(51) Int Cl.:
***H01M 8/1018*** (2016.01)  ***H01M 4/94*** (2006.01)
***H01M 12/06*** (2006.01)  ***H01M 12/08*** (2006.01)

(21) Application number: **17177929.1**

(22) Date of filing: **26.06.2017**

(54) **OXYGEN ASSOCIATED ENERGY CONVERSION DEVICE**

SAUERSTOFFASSOZIIERTE ENERGIEUMWANDLUNGSVORRICHTUNG

DISPOSITIF DE CONVERSION D'ÉNERGIE ASSOCIÉ À DE L'OXYGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.01.2019 Bulletin 2019/01**

(73) Proprietor: **RISE Acreo AB
164 25 Kista (SE)**

(72) Inventors:
• **CRISPIN, Xavier
610 20 KIMSTAD (SE)**
• **BERGGREN, Magnus
602 18 NORRKÖPING (SE)**
• **FABIANO, Simone
602 31 NORRKÖPING (SE)**

• **WANG, Suhao
602 20 NORRKÖPING (SE)**
• **VAGIN, Mikhail
583 33 LINKÖPING (SE)**

(74) Representative: **AWA Sweden AB
P.O. Box 45086
104 30 Stockholm (SE)**

(56) References cited:
**EP-A1- 0 131 829      WO-A1-83/02368**

• **YANLIANG LIANG ET AL: "Heavily n-Dopable
[pi]-Conjugated Redox Polymers with Ultrafast
Energy Storage Capability", JOURNAL OF THE
AMERICAN CHEMICAL SOCIETY, vol. 137, no. 15,
22 April 2015 (2015-04-22), pages 4956-4959,
XP055335961, US ISSN: 0002-7863, DOI:
10.1021/jacs.5b02290**

**Description**

Technical field of the invention

The present invention relates to the field of fuel cells and/or batteries using oxygen ($O_2$) as one of the reactants.

Background of the Invention

Fuel cells and/or batteries using oxygen ($O_2$) as one of the reactants are highly interesting alternatives for energy conversion. One of the reasons making this kind of devices highly interesting is that air may be used as a source for $O_2$. Not only is air an abundant source for energy production, the use of it also means that only the second reactant has to be handled, e.g. transported. In this kind of oxygen associated energy conversion devices, oxygen reduction reaction (ORR) is a key reaction occurring at one of the electrodes of the device, i.e. at the cathode. The material of the cathode will react with $O_2$, which upon that reaction will undergo reduction. The material used for the electrode must therefore both be conductive at the reduction potential and it must show electrocatalytic activity. Further, the cathode should be porous for both the electrolyte and gas. In fuel cells the other reactant, which often is called the fuel, may for example be hydrogen ($H_2$) or methanol.

One of the largest problems associated with this kind of energy production is the slow kinetics of the oxygen reduction reaction which may result in a low energy conversion efficiency. This has motivated an extensive research for finding new materials for the electrodes and there is a diversity of materials which may be used as electrode material in the fuel cells and/or the batteries. For example, the electrodes may be made from both inorganic, e.g. metals, and organic materials. Among the examples of organic materials, p-type conductive polymers have been used as cathode material. There are many advantages using p-type conductive polymers, e.g. they may be deposited from a solution and they may be synthesized at low temperature. The low energy consumption required for manufacture ensures a short energy payback time when integrated in an energy conversion device.

One drawback of using the p-type conductive material is the low conductivity of the p-type conducting polymer used as the cathode material in the potential region available for the oxygen reduction reaction. A common way to increase or to boost the energy conversion efficiency is to use noble metals, e.g. platinum in the form of nanoparticles, but that may significantly increase the cost of this kind of devices which may hinder the implementation of for example fuel cells. Hence, there is a need to improve the current state of the art.

EP 0 131 829 A1 discloses an electrochemical fuel cell comprising an electrolyte, electrochemically oxidizable fuel, an electrochemically reducible oxidizing agent and catalyst electrode means in contact with the electrolyte comprising a conjugated polymer having conjugated unsaturation along a main backbone chain thereof, said polymer being electrochemically oxidizable to a p-type doped material and electrochemically reducible to an n-type doped material.

Yanliang Liang et al (Journal of the American Chemical Society, vol. 137, no. 15, p. 4956-4959) disclose heavily n-dopable π-conjugated redox polymers with ultrafast energy storage capability.

WO 83/02368 A1 discloses battery electrodes batteries fabricated with mono and fused heterocyclic ring system polymers.

Summary of the Invention

It is an object of the present invention to improve the current state of the art and to mitigate at least some of the above mentioned problems. These and other objects are achieved by an oxygen associated energy conversion device according to the accompanying independent claims.

According to a first aspect of the present invention an oxygen associated energy conversion device is provided. The oxygen associated energy conversion device comprises:

- a cathode;
- an anode;
- an electrolyte arranged between said cathode and said anode;

wherein said cathode is an air-electrode adapted for an oxygen reduction reaction and wherein said cathode comprises a n-type conducting polymer, and is characterized in that said n-type polymer is poly(benzimidazobenzophenanthroline) (PPBL).

The present invention is based on the realization that the conductivity of n-type conducting polymers is maintained, or even that the conductivity of these polymers has its maximum, in the range of potentials used for the oxygen reduction reaction. Stated differently, the n-type conducting polymer is conductive in negative bias where $O_2$ is reduced.

It shall be understood that the term "oxygen associated energy conversion device" as used herein refers to a power source, such as a battery or a fuel cell, which uses oxygen as one of the reactants for producing energy. Phrased differently, an oxygen associated energy conversion device may be an oxygen associated electrochemical power source.

The oxygen associated energy conversion device comprises an air-electrode, i.e. the cathode, where oxygen is electrochemically reduced.

It shall be understood that the cathode being an air-electrode means that the cathode is the electrode in the oxygen associated energy conversion device where the oxygen reduction reaction is occurring. The term "air-electrode" means that it may use air as the source for oxygen.

It shall be understood that a n-type conducting polymer is a polymer converted to a conductive state through a reductive process wherein the majority of charge carriers are electrons. This conversion may be referred to as n-doping. The n-doping may be illustrated by the Seebeck coefficient which is negative for a n-type polymer. A negative Seebeck coefficient indicates that the majority of charge carriers are electrons.

According to some embodiments, the Seebeck coefficient of the n-type conductive polymer is in the range of -0.02 to -0.4 mV/K. The Seebeck coefficient may be defined as the sign and the amplitude of the potential difference measured on the polymer upon the application of a temperature difference. Negative potential at the cold side indicates a negative Seebeck coefficient. Stated differently, the Seebeck coefficient of a polymer is a measure of the magnitude of an induced thermoelectric voltage in response to a temperature difference across that material.

According to some embodiments, the cathode is a gas diffusion electrode. The function of a gas diffusion electrode typically relies on the establishment of so-called triple phase boundaries. These points, i.e. the triple phase boundaries, appear where main elements (gas, electronic conductor and ionic conductor) meet each other. It may be understood that the gas may be oxygen or water vapors, the electronic conductor may be the n-type conducting polymer and the ionic conductor may be the electrolyte, and therefore it shall be understood that a triple phase boundary may appear where e.g. the oxygen, the n-type polymer and the electrolyte meet. The triple phase boundaries are where the oxygen reduction reaction may occur.

According to some embodiments, the triple phase boundary is integrated into the electrode. This may be achieved by having the electrode gas permeable and by mixing the n-type polymer of the electrode with the electrolyte material.

According to some embodiments the electrode is porous. The porosity may enable diffusion on the electrolyte into the electrode. Further, a high porosity enhances the efficiency of delivering the reactant to the triple phase boundaries. According to some embodiments, the pores of the porous electrode are of different sizes. Large pores enhance the transport of reactants and/or products, whereas small pores and/or no pores enhance the contact between the electrode material, e.g. the n-type polymer of the cathode and the electrolyte. According to some embodiments, the gas diffusion electrode comprises large pores on the side which is in contact with the gas and small or no pores on the side which is in contact with the electrolyte.

According to some embodiments the cathode and/or the electrolyte is hydrophobic to facilitate transport of the reaction products of the oxygen reduction reaction, e.g. water. If the water is not properly transported away, the access to triple point boundaries will decrease. Additionally, or alternatively, the cathode and/or the electrolyte is temperature stable. For example, the device may tolerate temperatures up to 250 °C.

According to some embodiments, the electrolyte may be a liquid electrolyte, a gel electrolyte or a solid state electrolyte. According to some embodiments the electrolyte is an ion-exchange membrane.

According to some embodiments of the invention, the oxygen associated energy conversion device comprises a membrane electrode assembly (MEA). The membrane electrode may for example comprise two electrodes, i.e. a cathode and an anode, and an electrolyte membrane. The electrodes may be gas diffusion electrodes.

According to some embodiments of the invention, the electrolyte is phosphoric acid.

According to some embodiments of the invention, the phosphoric acid is supported by a ceramic material, e.g. silicon carbide, to form a solid electrolyte.

According to some embodiments of the invention, the oxygen associated energy conversion device further comprises current collectors arranged in direct contact with the electrode, e.g. the gas diffusion electrode. For example, the current collectors may be plates of graphite or metal. The current collectors may comprise engraved tubes for gas supply.

According to some embodiments of the invention, the oxygen associated energy conversion device further comprises gasket. The gasket may be an insulating plate isolating the membrane electrode assembly from the environment.

According to some embodiments of the invention the electron affinity of the n-type polymer in its un-doped state is below -3 eV, or below -4 eV, or below -5 eV at pH 7. It should be understood that with below it means that the absolute value of the electron affinity is larger than 3 eV, or larger than 4 eV, or larger than 5 eV. A larger absolute value of the electron affinity indicates that the polymer is easier to negatively dope. Stated differently, the lowest unoccupied molecular orbital (LUMO) for the un-doped polymer is below -3 eV, or below -4 eV, or below -5 eV.

According to some embodiments, said n-type polymer is poly(benzimidazobenzophenanthroline) (PBBL) doped with a reducing agent, e.g. tetrakis(dimethylamino)ethylene (TDAE) or tetrathiofulvalene (TTF).

According to some embodiments the poly(benzimidazobenzophenanthroline) is doped by being exposed to vapor comprising tetrakis(dimethylamino)ethylene. The doping may be monitored by measuring the conductivity of the polymer which may increase during upon doping of the polymer. For example, the conductivity of poly(benzimidazobenzophenanthroline) increases several order of magnitude upon exposure of tetrakis(dimethylamino)ethylene vapor.

According to some embodiment, said n-type polymer catalyzes the oxygen reduction reaction.

According to some embodiments, the n-type conducting polymer is used as the only catalyst for the oxygen reduction reaction. Stated differently, the n-type conducting polymer do not need any addition of a co-catalyst, e.g. noble metal nanoparticles, to catalyze the oxygen reduction reaction. A combination of high conductivity and a good catalytic functionality in one material, such as in the n-type conducting polymer, is advantageous for the fabrication of the cathode, since it increases the rate of the oxygen reduction reaction and lowers the inner resistance of the cathode. Since it is all in one material this type of cathode may be simpler, cheaper and easier to produce than if there is a need for combining two materials to reach the same conductivity and catalytic functionality.

According to some embodiments, the cathode further comprises a co-catalyst, e.g. noble metal nanoparticles. The co-catalyst may then further increase the electrocatalytic functionality of the cathode and hence the efficiency of the energy conversion of the oxygen associated energy conversion device.

According to some embodiments, the oxygen associated energy conversion device is a fuel cell wherein the anode comprises a p-type conducting polymer. It shall be understood that a p-type conducting polymer is a polymer converted to a conductive state through an oxidative process. This conversion may be referred to as p-doping. The p-type conductive polymer has holes as the majority of its charge carriers. The p-doping may be illustrated by the Seebeck coefficient which is positive for a p-type polymer. A positive Seebeck coefficient indicates that the majority of charge carriers are holes.

According to some embodiments the p-type polymer may for example be polyethylenedioxythiophene (PEDOT), polyaniline, or polypyrrole.

According to some embodiments, the anode further comprises a co-catalyst, e.g. noble metal nanoparticles. The co-catalyst may then further increase the electrocatalytic functionality of the anode.

According to some embodiments, the oxygen associated energy conversion device is an all organic oxygen associated energy conversion device. An all organic oxygen associated energy conversion device means that all components of the oxygen associated energy conversion device comprises organic material and that they do not comprise any inorganic material such as metals. This is advantageous from both a recycling perspective and a production perspective. From a production perspective it is advantageous since the components, e.g. cathode, anode, electrolyte, may be solution processed. It shall be understood that by "solution processed" it is meant that they can be deposited, e.g. printed or coated from a liquid. The liquid may for example be a solution, an emulsion or a dispersion comprising the respective material. From a recycling perspective it is advantageous since there is no need to separate inorganic and organic material from each other.

According to some embodiments the second reactant for a fuel cell as described herein may be in gas form. For example, the second reactant may for example be hydrogen gas ($H_2$).

According to some embodiments the second reactant for a fuel cell as described herein may be a liquid reactant or a reactant in gel form. A reactant in gel form is advantageous since it may prevent leakage of the second reactant to the surroundings.

According to some embodiments, the gel reactant may be deposited together with the rest of the components of the fuel cell or it may be added in a later stage when the fuel cell is in use.

According to some embodiments, the oxygen associated energy conversion device is an air-metal battery wherein the anode comprises a metal or a metal composite. The oxygen reduction reaction occurs during discharging of the battery.

According to some embodiments the metal may for example be lithium, sodium, calcium, potassium, aluminum, magnesium, or zinc.

According to some embodiments the metal composite is based on the metals mentioned above. For example, the composite may be carbon-based, silicon-based, lithium-titanate, tin, metal alloys, metalliods, ternary metal vanadates, iron oxides.

According to some embodiments of the invention, the air-metal battery is a primary battery, i.e. a battery which is discharged irreversibly.

According to some embodiments of the invention, the air-metal battery is a secondary battery, i.e. a battery which a battery which may be recharged.

According to some embodiments of the invention, when said air battery is a secondary battery, said pores of the electrode accommodate the reaction products. In other words, during discharging of the battery oxygen is reduced to superoxides or peroxides which may be stored inside of said pores. When re-charging such a battery, the superoxides or peroxides are oxidized back to oxygen.

According to some embodiments, the oxygen associated energy conversion device is provided as a film, e.g. a printed label. The film comprises several layers where the different components, e.g. the cathode, the anode and the electrolyte, may be constituting one or several layers.

According to some embodiments, the thickness of the cathode and/or the anode is within the range of 20 nm - 50 $\mu$m. Additionally, or alternatively, the thickness of the film may be at least 20 nm, or at least 50 nm, or at least 100 nm, or at least 500 nm, or at least 1$\mu$m, or at least 20$\mu$m. Additionally, or alternatively, the film may not be thicker than 50 $\mu$m, or 20 $\mu$m, or 1 $\mu$m, or 500 nm.

According to some embodiments, the thickness of the electrolyte is within the range of 100nm - 500$\mu$m, or within the range of 500nm - 500$\mu$m, or within the interval of 1 $\mu$m- 250 $\mu$m.

According to some embodiments of the invention the different layers of the film may be deposited by one or several depositing techniques. Examples of depositing techniques which may be used is bar coating, printing, evaporation, as well as spray coating.

According to some embodiments, the different layers of the film is deposited from a liquid comprising the respective material. The liquid may for example be a solution, an emulsion or a dispersion comprising the respective material.

According to some embodiments, the electrolyte is a solid state electrolyte which is arranged as a membrane between said cathode and said anode.

According to some embodiments, the electrolyte may be a solid state electrolyte, e.g. it may be a solid state ion-exchange membrane. The membrane should have an ionic conductivity towards at least one of the ionic products of the electrical power generation process and blocking properties to the reactants. The electrolyte may for example be a proton conductor, such as Nafion®, Aciplex®, Flemion®, and Dow membranes, in a hydrogen fuel cell, or the electrolyte may be a metal ion-conductor, such as lithium bis(trifluoromethane)sulfonimide, lithium hexafluorophosfate, lithium tetrafluoroborate for an air-metal battery.

According to some embodiments the solid state electrolyte may have an ion-conductivity in the range of $10^{-5}$ - $10^{-1}$ S cm$^{-1}$, or it may be $10^{-4}$ - $10^{-2}$ S cm$^{-1}$. It shall be understood that here ion-conductivity is seen as a mass transport property of the membrane.

According to some embodiments, the conductivity of the n-type polymer is within the range of 0.01-100 S/cm, or within the range of 0.1-50 S/cm, or within the range of 1-10 S/cm, or within the range of 1-4 S/cm, or within the range of 1.5-3 S/cm, or within the range of 2-3 S/cm at pH 7. The conductivity measured at pH 7 correlates to the device performance of the oxygen associated energy conversion device, e.g. a higher conductivity correlates to a better device performance. The device performance may be understood as the efficiency of energy conversion. A higher conductivity lowers the inner resistance of the cathode which will result in an increased efficiency of the oxygen associated energy conversion device. If the pH is lowered below 7, the conductivity of the n-type polymer may typically increase. If increasing the pH above 7, the conductivity of the n-type polymer may typically be unchanged or just undergo a minor it may just be slightly decrease.

According to a second aspect of the invention an oxygen sensor is provided. The oxygen sensor comprises:

- an oxygen associated energy conversion device as described above;
- an indicator powered by said energy conversion device;

wherein said energy conversion device is arranged to power said indicator when brought into contact with oxygen.

Effects and features of this second aspect of the present invention are largely analogous to those described above in connection with the first aspect of the inventive concept. Embodiments mentioned in relation to the first aspect of the present invention are largely compatible with the second aspect of the invention.

When in use, the oxygen sensor will indicate the presence of oxygen. The oxygen associated energy converison device will power the indicator as soon as oxygen is present in its sourrounding.

According to some embodiments, said indicator is a visible indicator or a sound indicator.

According to some embodiments, the visible indicator is a light emitting diode. When powered by the oxygen associated energy conversion the light emitting diode may light up and the light indicates the presence of oxygen.

According to some embodiments, said oxygen associated energy conversion device is an air-metal battery or a fuel cell.

According to some embodiments, said oxygen associated energy conversion device is provided as a printed label. The oxygen sensor may hence be provided as a label inside of a container, e.g. for food storage.

According to a third aspect of the invention an air tight container is provided. The air tight container comprises an oxygen sensor as described above inside said container. The oxygen sensor may indicate the presence of oxygen inside of the air tight container, e.g. caused by leakage of oxygen.

Effects and features of this third aspect of the present invention are largely analogous to those described above in connection with the first and second aspects of the inventive concept. Embodiments mentioned in relation to the first and second aspects of the present invention are largely compatible with the third aspect of the invention.

Brief description of the drawings

The above objects, as well as additional objects, features and advantages of the present invention, will be more fully appreciated by reference to the following illustrative and non-limiting detailed description of embodiments of the present invention, when taken in conjunction with the accompanying drawings, wherein:

Fig. 1 shows a schematic view of a fuel cell in accordance with at least one embodiment of the invention;
Fig. 2 shows a schematic view of a metal-air battery in accordance with at least one example embodiment of the invention;
Fig. 3a shows a molecular structure of poly(benzimidazobenzophenanthroline) in accordance with at least one embodiment of the invention;
Fig. 3b shows a molecular structure of tetrakis(dimethylamino)ethylene in accordance with at least one example embodiment of the invention;
Fig. 3c shows a graph of the evolution of the electrical conductivity of poly(benzimidazobenzophenanthroline) upon exposure of tetrakis(dimethylamino)ethylene vapour in accordance to at least one example embodiment of the invention;
Fig. 4 shows the electronic energies of PEDOT, P3HT and PBBL in accordance with at least one example embodiment of the invention;
Figs. 5a-d shows the effect of polymer conductivity on the efficiency of oxygen reduction reaction electrocatalysis in accordance with at least one example embodiment of the invention;
Figs. 6a-b shows the different pathways of the oxygen reduction reaction on PBBL and PEDOT in accordance with at least one example embodiment of the invention.

Detailed description

In the following, embodiments of the present invention will be discussed with reference to the accompanying figures. It should be noted that this detailed description by no means limits the scope of the invention. The scope of the invention is defined by the appended claims. Further, that specific features are mentioned in connection to an embodiment of the invention does not mean that those features cannot be used to an advantage together with other embodiments of the invention.

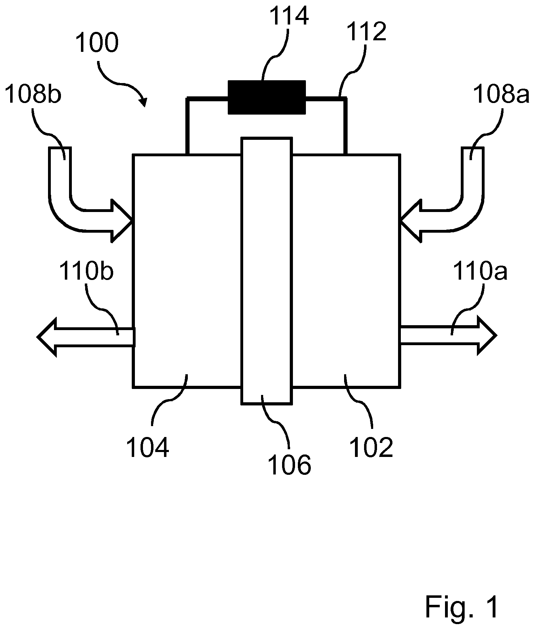

Fig. 1 shows an oxygen associated energy conversion device, which in Fig. 1 is a fuel cell 100. The fuel cell 100 comprises a cathode 102, an anode 104 and an electrolyte 106. The cathode 102 comprises a n-type conductive polymer. The fuel cell 100 further comprises inlets 108a, b for the first and second reactants, outlets 110a, b for the reaction products and unreacted reactants and an external circuit 112 for transporting electrons between the anode 104 and the cathode 102. The external circuit comprises a load 114. The load 114 may be a device powered by the electricity generated by the fuel cell, for example it may be a lamp or a sound device.

At the anode 104, the second reactant is oxidized during operation. The second reactant may for example be methanol or hydrogen gas. The oxidation turns the second reactant to positively charged ions and electrons. The electrolyte 106 may be designed such that the positive charged ions may be transported through it, while the electrons may be hindered. Therefore, the electrons will be transported through the external circuit 112.

When the second reactant provided by the inlet 108b is methanol, the anode reaction of the fuel cell 100 may be written on the following formula:

$$CH_3OH + H_2O \rightarrow CO_2 + 6H^+ + 6e^-$$

The cathode 102 is an air-electrode adapted for an oxygen reduction reaction and comprises a n-type conducting polymer. The cathode 104 catalyzes the oxygen reduction reaction. In other words, the n-type conducting polymer catalyzes the oxygen reduction reaction. The first reactant, i.e. $O_2$, is provided to the cathode 102 via the inlet 108a. $O_2$ may be provided as air.

The oxygen reduction reaction, i.e. the cathode reaction of the fuel cell 100, may be written on the following formula:

$$\frac{3}{2}O_2 + 6H^+ + 6e^- \rightarrow H_2O$$

The overall formula for the fuel cell 100 using oxygen as the first reactant and methanol as the second reactant may therefore be:

$$CH_3OH + \frac{3}{2}O_2 \rightarrow CO_2 + 6H_2O$$

The electrolyte 106 is arranged between the cathode 102 and the anode 104. In Fig. 1, the cathode 102 is the electrode arranged on the right side of the electrolyte 106 whereas the anode 104 is the electrode arranged on the left side of the electrolyte. The electrolyte 106 may for example be a solid-state ion-exchange membrane having an ionic conductivity towards at least one of the ionic products of the electrical power generation process and blocking properties to the reactants. The solid-state membrane may for example be made from Nafion. The electrolyte 106, i.e. the solid state ion-exchange membrane of Fig. 1, is permeable for $H^+$, $H_2O$ and $CO_2$ and they may be transported in the direction from the anode to the cathode.

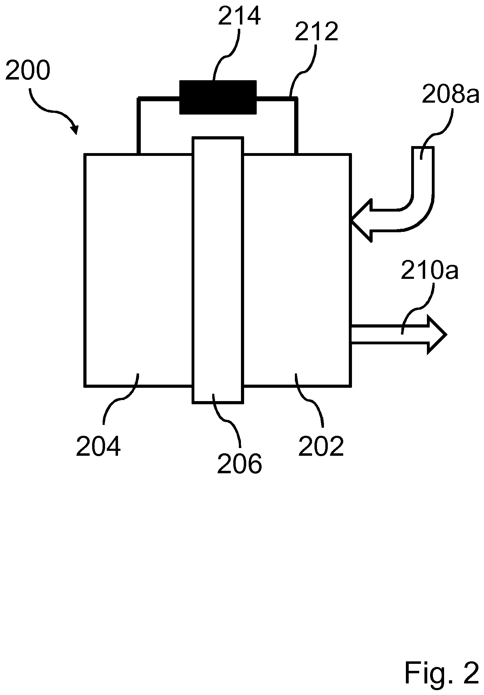

Fig. 2 shows an oxygen associated energy conversion device, which in Fig. 2 is a metal air battery 201. The metal-air battery 201 comprises a cathode 202, an anode 204 and an electrolyte 206. The cathode 202 comprises a n-type conductive polymer. The metal-air battery 201 further comprises an inlet 208 for air, an outlet 210 for the reaction product and unreacted air, an external circuit 212 for transporting electrons between the anode 204 and the cathode 202. The external circuit comprises a load 214. The load 214 may be a device powered by the electricity generated by the metal-air battery, for example it may be a lamp or a sound device.

At the anode 204, the second reactant is oxidized during operation. In a metal-air battery the second reactant is the metal constituting the anode 204. The anode 204 may for example comprise lithium, sodium, potassium, aluminum, magnesium, or zinc. Below follows an example where aluminum is used as the anode 204 in the metal-air battery 201.

The anode reaction of the metal-air battery 201 may be written on the following formula:

$$4Al + 12OH^- \rightarrow 4Al(OH)_3 + 12e^-$$

The cathode 202 is an air-electrode adapted for an oxygen reduction reaction and comprises a n-type conducting polymer. The cathode 202 catalyzes the oxygen air reduction. In other words, the n-type polymer catalyzes the oxygen reduction reaction. Air is provided to the cathode 202 via the inlet 8. The metal-air battery 201 uses the oxygen comprised in the air for the cathode reaction, i.e. the oxygen reduction reaction.

The oxygen reduction reaction, i.e. the cathode reaction of the metal-air battery 201, may be written on the following formula:

$$3O_2 + 6H_2O + 12e^- \rightarrow 12OH^-$$

The overall formula for the metal-air battery 201 may therefore be:

$$4Al + 3O_2 + 6H_2O \rightarrow 4Al(OH)_3$$

The electrolyte 206 is arranged between the cathode 202 and the anode 204. In Fig. 2, the cathode 202 is the electrode arranged on the right side of the electrolyte 206 whereas the anode 204 is the electrode arranged on the left side of the electrolyte 206. The electrolyte 6 may for example be a metal ion-conductor such as lithium bis(trifluoromethane)sulfonimide.

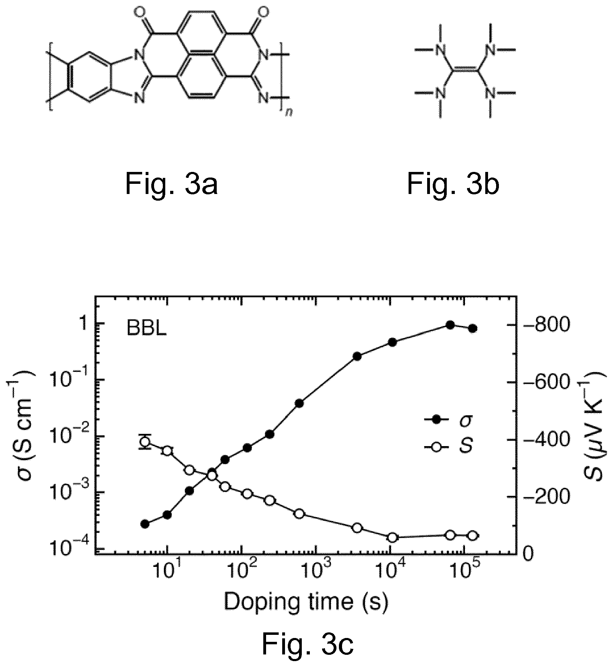

Fig. 3a shows the molecular formula of poly(benzimidazobenzophenanthroline) which may be doped and serve as the n-type conductive polymer in the cathode of an oxygen associated energy conversion device. Doped poly(benzimidazobenzophenanthroline) may for example be the n-type conductive polymer comprised in the cathode 2 of the fuel cell 1 of Fig. 1 or in the cathode 202 of the metal-air battery 201. Poly(benzimidazobenzophenanthroline) may show n-type properties at pH 7 and may therefore catalyze the oxygen reduction reaction at this pH.

Fig. 3b shows the molecular formula of tetrakis(dimethylamino)ethylene which may be used as a doping agent for doping a polymer. For example, tetrakis(dimethylamino)ethylene may be used as a reduction agent to dope poly(benzimidazobenzophenanthroline).

Fig. 3c shows a graph where both the conductivity (filled circles) and the Seebeck coefficient (open circles) of poly(benzimidazobenzophenanthroline) is plotted against doping time, i.e. the time when poly(benzimidazobenzophenanthroline) was exposed by tetrakis(dimethylamino)ethylene. As seen in the graph, the conductivity increases with time whereas the Seebeck coefficient decreases. This indicates that the poly(benzimidazobenzophenanthroline) goes from being an insulator to a n-type conductive polymer.

The following text is a description of electrochemical characterization of poly(benzimidazobenzophenanthroline) (PBBL) in comparision with two p-type conducting polymers; polyethylenedioxythiophene (PEDOT) and poly(3-hexylthiophene-2,5-diyl) (P3HT). The electrochemical characterization describes for example the efficiency of the oxygen reduction reaction when catalyzed by the three compounds as well as the different pathways of the oxygen reduction reaction. The experiments indicate that PBBL is an excellent material for oxygen-associated energy conversion systems, such as fuel cells and air-metal batteries

**Methods**

**Electrochemical experiments.** All electrochemical experiments were performed with an Autolab type III bipotentiostat (Autolab, EcoChemie, Netherlands) in a conventional three-electrode electrochemical cell using a platinum wire as the auxiliary electrode and an Ag/AgCl (3 M KCl) as the reference electrode in aqueous media. A glassy carbon electrode (GCE, 5 mm diameter) was utilized as a working electrode. Prior to use, GCE was successively polished with 1.0 and 0.05 $\mu$m $Al_2O_3$ powders, and sonicated in Milli-Q water. The rotating disk ring electrode setup (5 mm OD GCE, 320 $\mu$m gap, platinum ring 6.25 mm ID, 7.92 mm OD, Pine Research Instrumentation Inc.) has been utilized for the control of rotation speed.

**Electrode modification with PBBL.** 5 mg/mL solution of PBBL (Sigma-Aldrich) in methanesulfonic acid (MSA; Sigma-Aldrich) was drop-casted onto the electrodes followed by immediately dipping the electrodes into deionized water to remove MSA. Finally, the films were annealed in the oven overnight at 100°C.

**Electrode modification with PEDOT.** The electrosynthesis of PEDOT was done at a constant potential 0.8 V in monomer solution (0.1 M EDOT and 0.1 M $N(Bu)_4ClO_4$ in acetonitrile) using an organic reference electrode (silver wire in solution of 0.01 M $AgNO_3$, 0.1 M $N(Bu)_4ClO_4$ in acetonitrile). The deposition process has been controlled by chronocoulometry of different charges (4, 5, 10 and 15 mC). Prior to further studies, the PEDOT-modified electrodes were washed with a buffer solution.

**Electrode modification with P3HT or N2200.** 5 mg/mL solution of P3HT (Sigma-Aldrich) or N2200 (Polyera Activlnk) in chloroform was drop-casted onto the electrodes followed by drying.

**In-situ resistometry.** A two-terminal gold interdigitated microelectrode array on glass (15 $\mu$m gap; MicruX Technologies, Spain) was utilized as two independent working electrodes biased with respect to each other by 50 mV. The array modification with PEDOT has been done by in-situ electrosynthesis on biased array in a monomer solution [43,44] (Supporting Note 3). The previously mentioned procedure was utilized for the array modification by PBBL and P3HT films. The resistometry data was acquired by voltammetry (5 mV/s) in aqueous 0.1 M KCl using a common electrochemical setup.

**Result and discussion**

Firstly, we demonstrate that a conjugated polymer of high electron affinity, such as the PBBL, is a promising choice for polymer electrodes to achieve ORR simply thanks to its electronic structure. In a bench-marking effort, we choose three types of conjugated polymers: PEDOT (electron affinity (EA) 3.28 eV[20], ionization potential (IP) 4.0-4.6 eV); poly(3-hexyl thiophene) (P3HT) (EA 3.2 eV[21], IP 5.4 eV); and PBBL (EA 4.4 eV, IP 6.0 eV [22]). Indicated as a line, the redox level of ORR is significantly shifted from the thermodynamically-dictated value (5.7 eV [23]) towards higher electron energies. P3HT is stable in air since the oxygen redox level locates within the band gap of the polymer. Secondly, on the contrary, the top levels of the valence band of PEDOT is above the redox level of ORR, which ensure a spontaneous electron transfer from PEDOT to oxygen[24]. Simplified, this is equivalent to a partial depletion of the valence band of PEDOT, *i.e.* PEDOT becomes further positively doped. Thirdly, PBBL is stable in air since the bottom level of the conduction band is empty and cannot transfer any electrons to oxygen. The stability [existence of a reaction] in air is manifested by an absence [a presence] of features in the optical absorption spectrum.

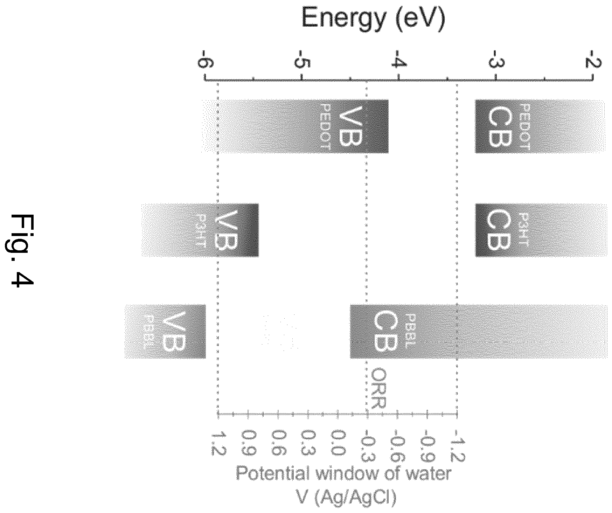

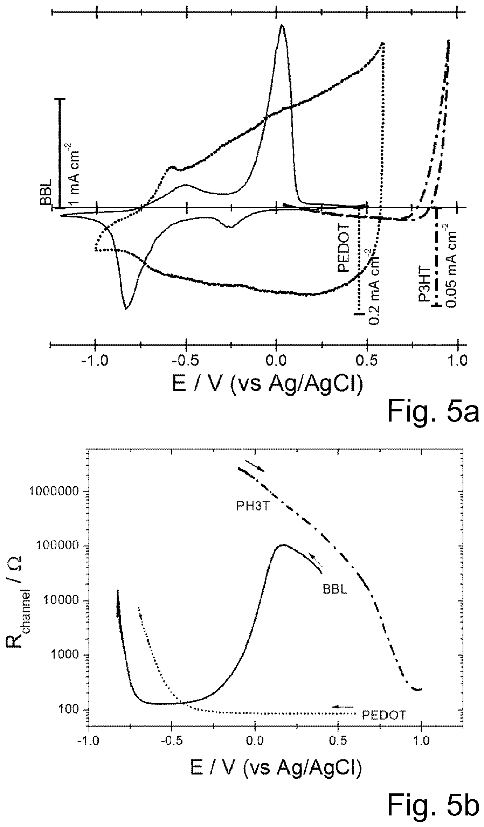

Fig. 4 shows that only three electronic levels are accessible for electrochemical phenomena in aqueous electrolytes due to the limited electrochemical window of water. This restriction is relevant since the ORR, as a half reaction in fuel cells or batteries, is typically taking place in aqueous media. Those bands correspond to the current rise in the cyclic voltammograms acquired in aqueous electrolyte on glassy carbon electrode (GCE) coated by the conjugated polymer films (Fig. 5a). Hence, we clearly classify three classes of conjugated polymers: PEDOT with low ionization potential, P3HT with high ionization potential and PBBL with high electron affinity.

In order to investigate the conductivity of the polymers in the studied potential window, we ran *in situ* resistometry measurements (Fig 5b). The *in situ* resistance is measured between two interdigitated electrodes (source and drain maintained at a small constant potential difference) upon applying a potential to a third electrode (gate), which is read by a reference electrode. This is a configuration similar to an electrochemical transistor. At 0.7 V, we observe that the resistance of the P3HT transistor channel drops abruptly (dash-dotted curve). This is attributed to the simultaneous injection of holes, from the source metal terminal, into the valence band, *i.e.* oxidative doping, and the penetration of anions from the electrolyte into the P3HT layer. The resulting P3HT film is positively doped and has become electrically

conducting[25]. The low ionization potential polymer PEDOT (dotted curve) is positively doped already at -0.4V and it keeps its highly conducting state, metallic-like characteristics (as displayed by the free-electron optical absorption in the IR), even at higher positive potentials. PEDOT films on GCE behaves like a porous metal electrode with a clear capacitive contribution, typical for electric double layer formation, characterized by a square-box shape of the I-V characteristics at positive bias (Fig.5a)[25]. This is supported by the low resistance measured on PEDOT channels (100 $\Omega$) in the potential region from 0.6V to -0.6 V (Fig. 5b). At potentials more negative than -0.6 V, the resistance of PEDOT increases dramatically since its oxidation level becomes so low that PEDOT becomes neutral, poorly conducting and exhibit a strong blue color (*i.e.* with a clear band gap in the UV-vis)[27]. The voltammetry response of a 40 nm thick PBBL film, on a GCE, shows two well-defined redox processes with formal potentials of -0.11 V and -0.67 V (Fig. 5a), assigned to complex sequential transfers of electrons[27-30]. In contrast to PEDOT, PBBL is neutral and insulating at positive bias, as indicated by the high resistance of the film (100 k$\Omega$, Fig. 5b). Comparing now Fig. 5a and 5b for PBBL, we observe that at the first reduction peak (-0.25V) there is a three orders of magnitude decrease on the channel resistance of the electrochemical transistor device. At negative electrode polarization, the electron energy increases, which gives that electrons are added (n-doping) into the lowest unoccupied molecular orbital (LUMO) of PBBL. This causes the polymer to switch from its pristine insulating state to a conducting state. PBBL is however complex and a further increase of the electron energy, *i.e.* with the electrode at even more negative polarization, leads to subsequent faradaic processes (Fig. 5a). This is observed at -0.67 V with a corresponding transition from metallic to a second insulating state of the material, which is due to over-reduction accommodated of two electrons per repeat unit[31]. Hence, we see the opposite trends of a so-called "p-type" polymer (low IP); which is positively doped at positive potentials and becomes insulating towards negative potentials; while a "n-type" polymer (high EA) is insulating at positive potentials and becomes conducting towards negative potentials. Having the different mechanisms of charge transport (*i.e.* n-type redox, p-type and metallic p-type for PBBL, P3HT and PEDOT, respectively), all three conducting polymers revealed the same order of magnitude of conductivity in their conducting states as illustrated by the values of the channel resistance observed on films with thicknesses of the same order of magnitude.

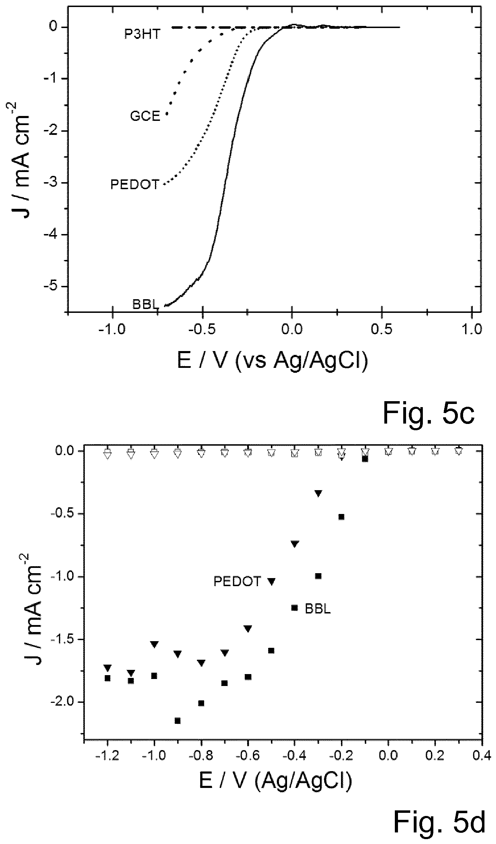

In Fig. 5c, we use the three different types polymers as ORR electrodes and we study the impact of the opposite trend in conductivity between p-type and n-type on the ORR at those polymer electrodes. The efficiency of ORR was studied with rotating disk electrode in an oxygen saturated aqueous electrolyte at neutral pH, which is the most challenging environment for non-precious metal-free catalysts. The reference system is the GCE displaying a rise of current at an overpotential of -0.35V reaching up to -2 mA cm$^{-2}$ (at -0.75V). The presence of a P3HT film on the GCE led to a suppression of currents of ORR since P3HT is in its insulating state at negative potential where ORR was observed on GCE. On the contrary, since both PBBL and PEDOT are conducting at slight negative potentials, we observed a clear enhancement of current to about -4 mAcm$^{-2}$ (at -0.75V) for PEDOT and -8 mA cm$^{-2}$ for PBBL as well as a much smaller overpotential compared to GCE: -0.3 V for PEDOT and +0.1 V for PBBL. The steady-state measurements (Fig. 5d) yielding the pure Faradaic electrode phenomena showed up to 14 times increase of ORR electrocatalytic currents acquired on PBBL in comparison with PEDOT (at -0.1 V). The reduction of the overpotential simultaneously with the higher ORR current in the PBBL case demonstrates a clear and unique electrocatalytic phenomenon regarding ORR.

Note that in some synthesis paths of conducting polymers (e.g. PEDOT), residual transition metal ions can significantly affect the ORR electrocatalysis efficiency[7,32]. We have chosen synthetic paths that are not involving such metal ions: it is a polycondensation of the PBBL monomers [9] and an electrochemical polymerization of EDOT in metal-free environment. Hence, we believe that the presented results are uniquely due to the conducting organic materials.

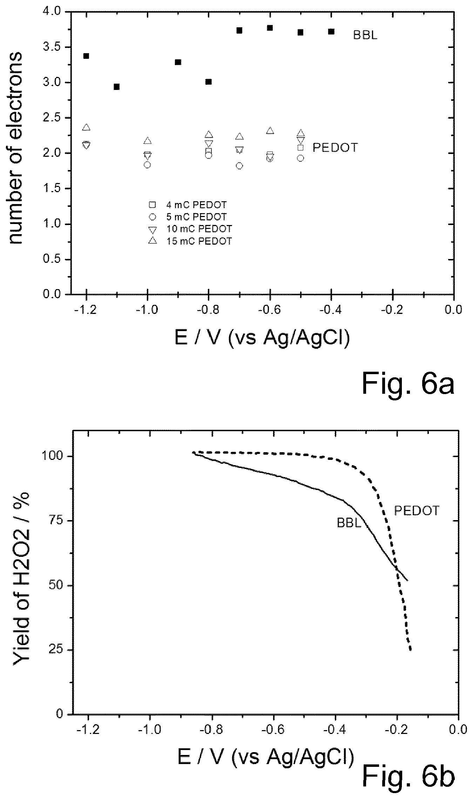

The mechanistic evaluation of the electrocatalytic performances of PBBL and PEDOT towards ORR was carried out in a hydrodynamic electrode setup. The number of electrons transferred per oxygen molecule (Fig. 6) determined by the Koutecky-Levich approach on PBBL reached the value of 3.8, suggesting a full reduction of oxygen to water. In contrast, PEDOT films undergo a two-electron transfer process regardless the film thickness. This is in good agreement with other report claiming that oxygen reacting at PEDOT electrode only lead to peroxide[33]. Being the backward process to ORR, water oxidation reported for PBBL[19] is characterized by smaller current densities and smaller number of electrons (1-2) transferred per water molecule illustrating asymmetry in forward and backward processes. The rate constant (0.005 cm s$^{-1}$ at -0.5 V) estimated for PBBL were up to two times larger in comparison with PEDOT. Moreover, it is possible to track the amount of peroxide produced using a ring-disk electrode. In particular, upon applying a potential to the polymer film on the rotating disk electrode, we follow the current passing through the platinum ring electrode when a potential specific for peroxide reduction is applied (1.4 V vs Ag/AgCl). The yield of peroxide is extracted from the disk and ring currents ratio. Considering the parallel course of ORR to hydrogen peroxide and deeper ORR to water, the potential dependence of the hydrogen peroxide yield showed smaller values estimated for PBBL in comparison with PEDOT. Together with the four electron transfer process, the low peroxide yield at PBBL is attributed to the consumption of peroxide due to presence of deeper reduction pathway of ORR towards water. In coherence, the kinetic study of obtained voltammetry data (Fig. 5c) in a frame of Tafel analysis revealed the different mechanisms of the ORR on PEDOT and PBBL manifested by the dissimilar rate-determining steps. The increase of negative polarization led to the appearance of slow charge transfer as a rate-determining step of the ORR on PBBL, which might be assigned to the deeper reduction

pathway towards water[34-37]. On the contrast, the ORR process on PEDOT showed charge transfer as a unified rate-determining step in wide region of polarization potentials.

To clarify ORR electrocatalysis on the generalized n-type conducting polymers of high electron affinity, the hydrodynamic measurements have been carried out on GCE modified with Polyera Activlnk N2200 (N2200, EA 4.22 eV, IP 5.91 eV[38]). Having electronic energies similar to PBBL, N2200 showed the absence of the ORR as the suppression of both disk and ring currents obtained at negative polarization in oxygen-saturated electrolyte. On the contrast to single-stranded N2200, the visible ORR electrocatalysis to hydrogen peroxide has been reported for double-stranded ladder redox polymers poly(o-phenylenediamine)[39] (PPD, EA 4.55 at pH 1) and poly(2,3-diaminonaphthalene)[40] (PDAN, EA 4.5 at pH 1) and characterized with current densities smaller than observed on PBBL. On the contrast to N2200, PBBL is a ladder polymer with a rigid double-stranded backbone[8] with the well-pronounced redox character[14,28]. Both PPD and PDAN are poor redox conductors in neutral aqueous electrolytes[41], which stipulate their low ORR activities in comparison with PBBL. These facts allow the hypothesis for the rational design of ORR organic electrocatalysts: the combination of (i) redox moiety of highly conductive material with (ii) a rigid ladder structure of the conjugated polymer backbone and (iii) the presence of both N- and O-heteroatoms.

To conclude, we demonstrate that n-doped conjugated polymer of high electron affinity such as PBBL enables a good electrical conductivity at negative potential and it can serve as a supporting or negative electrode for all kinds of reduction processes. The PBBL electrode exhibits a true electrocatalytic activity on ORR (low overpotential, high current) with a full reduction of dioxygen to water. The consumption of peroxide as an intermediate reactant is important[32] since it may attack the organic molecules and degrade them. Hence, the high ORR electrocatalytic activity in combination with the high temperature stability[11,42] make PBBL an excellent material for oxygen-associated energy conversion systems, such as fuel cells and air-metal batteries.

**References**

1 Li, Y. G. et al. An oxygen reduction electrocatalyst based on carbon nanotube-graphene complexes. Nature Nanotechnology 7, 394-400, doi:10.1038/nnano.2012.72 (2012).

2 Winther-Jensen, B., Winther-Jensen, O., Forsyth, M. & MacFarlane, D. R. High rates of oxygen reduction over a vapor phase-polymerized PEDOT electrode. Science 321, 671-674, doi:10.1126/science.1159267 (2008).

3 Emmott, C. J. M., Ekins-Daukes, N. J. & Nelson, J. Dynamic carbon mitigation analysis: the role of thin-film photovoltaics. Energy & Environmental Science 7, 1810-1818, doi:10.1039/c4ee00646a (2014).

4 Gueye, M. N. et al. Structure and Dopant Engineering in PEDOT Thin Films: Practical Tools for a Dramatic Conductivity Enhancement. Chemistry of Materials 28, 3462-3468, doi:10.1021/acs.chemmater.6b01035 (2016).

5 Cottis, P. P. et al. Metal-free oxygen reduction electrodes based on thin PEDOT films with high electrocatalytic activity. Rsc Advances 4, 9819-9824, doi:10.1039/c3ra46167j (2014).

6 Singh, S. K., Crispin, X. & Zozoulenko, I. V. Oxygen Reduction Reaction in Conducting Polymer PEDOT: Density Functional Theory Study. Journal of Physical Chemistry C 121, 12270-11277 (2017).

7 Kerr, R., Pozo-Gonzalo, C., Forsyth, M. & Winther-Jensen, B. The Reduction of Oxygen on Iron(II) Oxide/Poly(3,4-ethylenedioxythiophene) Composite Thin Film Electrodes. Electrochimica Acta 154, 142-148, doi:10.1016/j.electacta.2014.12.048 (2015).

8 Wang, S. H. et al. Thermoelectric Properties of Solution-Processed n-Doped Ladder-Type Conducting Polymers. Advanced Materials 28, 10764-+, doi:10.1002/adma.201603731 (2016).

9 Van Deusen, R. L., Goins, K. & Sicree, A. J. Thermally Stable Polymers from 1,4,5,8-Naphthalenetetracarboxylic Acid and Aromatic Tetraamines. Journal of Polymer Science Part A-1 6, 1777-1793 (1968).

10 Liang, Y. L. et al. Heavily n-Dopable pi-Conjugated Redox Polymers with Ultrafast Energy Storage Capability. Journal of the American Chemical Society 137, 4956-4959, doi:10.1021/jacs.5b02290 (2015).

11 Jenekhe, S. A. & Tibbetts, S. J. Ion-implantation doping and electrical properties of high-temperature ladder polymers. Journal of Polymer Science Part B-Polymer Physics 26, 201-209, doi:10.1002/polb.1988.090260111 (1988).

12 Arnold, F. E. & Van Deusen, R. L. Unusual Film-Forming Properties of Aromatic Heterocyclic Ladder Polymers. Journal of Applied Polymer Science 15, 2035-2047 (1971).

13 Wagner, M. et al. Characterization of Water-Dispersible n-Type Poly(benzimidazobenzophenanthroline) Derivatives. Macromolecular Chemistry and Physics 212, 1567-1574, doi:10.1002/macp.201100044 (2011).

14 Wilbourn, K. & Murray, R. W. Direct-current versus electronic conductivity of the ladder polymer poly(benzimidazobenzophenanthroline). Journal of Physical Chemistry 92, 3642-3648, doi:10.1021/j100323a062 (1988).

15 Coter, F. et al. Optical, magnetic resonanse and conductivity studies of the ladder polymer BBL. Synthetic Metals 29, E471-E476 (1989).

16 Kim, O. K. Ladder polymers as a new polymeric conductors. Molecular Crystals and Liquid Crystals 105, 161-173, doi:10.1080/00268948408071650 (1984).

17 Leopold, D. J., Brown, I. M. & Sandreczki, T. C. Electronic states induced by ion irradiation in a conjugated ladder polymer. Synthetic Metals 78, 67-71, doi:10.1016/0379-6779(95)03574-5 (1996).

18 Yu, L. P., Chen, M. & Dalton, L. R. Ladder polymers - recent developments and potential applications as electronic and optical materials. Chemistry of Materials 2, 649-659, doi:10.1021/cm00012a013 (1990).

19 Bornoz, P., Prevot, M. S., Yu, X., Guijarro, N. & Sivula, K. Direct Light-Driven Water Oxidation by a Ladder-Type Conjugated Polymer Photoanode. Journal of American Chemical Society 137, 15338-15341 (2015).

20 Ahonen, H. J., Lukkari, J. & Kankare, J. n- and p-Doped Poly(3,4-ethylenedioxythiophene): Two Electronically Conducting States of the Polymer. Macromolecules 33, 6787-6793 (2000).

21 Holliday, S. et al. High-efficiency and air-stable P3HT-based polymer solar cells with a new non-fullerene acceptor. Nature Communications 7, doi:10.1038/ncomms11585 (2016).

22 Geoghegan, M. & Hadziioannou, G. Polymer electronics. (Oxford University Press, 2013).

23 Bard, A. J. & Faulkner, L. R. Electrochemical Methods. Fundamentals and Applications. 236-238 (John Wiley and Sons, Inc, 2001).

24 Mitraka, E. et al. Oxygen-induced doping on reduced PEDOT. Journal of Materials Chemistry A 5, 4404-4412, doi:10.1039/c6ta10521a (2017).

25 Larsson, O., Laiho, A., Schmickler, W., Berggren, M. & Crispin, X. Controlling the Dimensionality of Charge Transport in an Organic Electrochemical Transistor by Capacitive Coupling. Advanced Materials 23, 4764-+, doi:10.1002/adma.201103131 (2011).

26 Conway, B. E. Electrochemical supercapacitors. Scientific Fundamentals and Technological Applications. (Kluwer Academic / Plenum Publishers, 1999).

27 Johansson, T., Pettersson, L. A. A. & Inganas, O. Conductivity of de-doped poly(3,4-ethylenedioxythlophene). Synthetic Metals 129, 269-274, doi:10.1016/s0379-6779(02)00086-3 (2002).

28 Wilbourn, K. & Murray, R. W. Electrochemical doping reactions of the conducting ladder polymer benzimidazobenzophenanthroline (BBL). Macromolecules 21, 89-96, doi:10.1021/ma00179a019 (1988).

29 Yohannes, T., Neugebauer, H., Jenekhe, S. A. & Sariciftci, N. S. Multiple reduction states with different conductivities of polybenzimidazobenzophenanthroline (BBL) studied with infrared spectroelectrochemistry. Synthetic Metals 116, 241-245, doi:10.1016/s0379-6779(00)00460-4 (2001).

30 Yohannes, T. et al. In situ UV-VIS-NIR and Raman spectroelectrochemical studies of the conjugated ladder polymer polybenzimidazobenzophenanthroline (BBL). Synthetic Metals 119, 319-320, doi:10.1016/s0379-6779(00)01459-4 (2001).

31 Zheng, T., Badrun, F., Brown, I. M., Leopold, D. J. & Sandreczki, T. C. Correlation of electron spin concentration and conductivity in the ladder polymer BBL as a function of electrochemical potential. Synthetic Metals 107, 39-45, doi:10.1016/s0379-6779(99)00138-1 (1999).

32 Foote, C. S., Valentine, J. S., Greenberg, A. & Liebman, J. F. Active oxygen in chemistry. (Blackie Academic & Professional, 1995).

33 Kerr, R., Pozo-Gonzalo, C., Forsyth, M. & Winther-Jensen, B. Influence of the Polymerization Method on the Oxygen Reduction Reaction Pathway on PEDOT. Ecs Electrochemistry Letters 2, F29-F31, doi:10.1149/2.010303eel (2013).

34 Damjanovic, A. On the kinetics and mechanism of oxygen reduction at oxide film-covered Pt electrodes in acid solutions 2. Electron transfer through the oxide film and mechanism of the reduction. Journal of the Electrochemical Society 138, 2315-2320, doi:10.1149/1.2085967 (1991).

35 Vigil, J. A., Lambert, T. N. & Eldred, K. Electrodeposited MnOx/PEDOT Composite Thin Films for the Oxygen Reduction Reaction. Acs Applied Materials & Interfaces 7, 22745-22750, doi:10.1021/acsami.5b07684 (2015).

36 Chowdhury, A. D., Agnihotri, N., Sen, P. & De, A. Conducting CoMn2O4-PEDOT nanocomposites as catalyst in oxygen reduction reaction. Electrochimica Acta 118, 81-87, doi:10.1016/j.electacta.2013.11.165 (2014).

37 Choe, J. E., Ahmed, M. S. & Jeon, S. 3,4-Ethylenedioxythiophene functionalized graphene with palladium nanoparticles for enhanced electrocatalytic oxygen reduction reaction. Journal of Power Sources 281, 211-218, doi:10.1016/j.jpowsour.2015.01.176 (2015).

38 Song, C. K., Eckstein, B. J., Tam, T. L. D., Trahey, L. & Marks, T. J. Conjugated Polymer Energy Level Shifts in Lithium-Ion Battery Electrolytes. Acs Applied Materials & Interfaces 6, 19347-19354, doi:10.1021/am505416m (2014).

39 Ohsaka, T., Watanabe, T., Kitamura, F., Oyama, N. & Tokuda, K. Electrocatalysis of 02 reduction at poly(ortho-phenylenediamine)- and poly(ortho-aminophenol)-coated glassy-carbon electrodes. Journal of the Chemical Society-Chemical Communications, 1072-1073, doi:10.1039/c39910001072 (1991).

40 Ohsaka, T., Watanabe, T., Kitamura, F., Oyama, N. & Tokuda, K. Electrocatalysis of poly(2,3-diaminonaphthalene)-filmed electrodes for reduction of oxygen. Journal of the Chemical Society-Chemical Communications, 487-489, doi:10.1039/c39910000487 (1991).

41 Pisarevskaya, E. Y., Nekrasov, A. A. & Alpatova, N. A. Electrochemical synthesis of poly-o-phenylenediamine and its spectroelectrochemical properties. Russian Journal of Electrochemistry 40, 1214-1218, doi:10.1023/B:RUEL.0000048657.68721.b7 (2004).

42 Berry, G. C. Properties of an optically anisotropic heterocyclic ladder polymer (BBL) in dilute solution. Journal of Polymer Science: Polymer Symposium 65, 143-172 (1978).

43 White, H. S., Kittlesen, G. P. & Wrighton, M. S. Chemical derivatization of an array of 3 gold microelectrodes with polypyrrole - fabrication of a molecule-based transistor. Journal of the American Chemical Society 106, 5375-5377, doi:10.1021/ja00330a070 (1984).

44 Chao, S. & Wrighton, M. S. Solid-state microelectrochemistry - electrical characteristics of a solid-state microelectrochemical transistor based on poly(3methylthiophene). Journal of the American Chemical Society 109, 2197-2199, doi:10.1021/ja00241a057 (1987).

## Claims

1. An oxygen associated energy conversion device comprising:

   - a cathode;
   - an anode;
   - an electrolyte arranged between said cathode and said anode;
   wherein said cathode is an air-electrode adapted for an oxygen reduction reaction and wherein said cathode comprises a n-type conducting polymer, **characterized in that** said n-type polymer is poly(benzimidazobenzophenanthroline), PBBL.

2. The oxygen associated energy conversion device according to claim 1, wherein said n-type polymer is poly(benzimidazobenzophenanthroline) PBBL, doped with a reducing agent, e.g. tetrakis(dimethylamino)ethylene TDAE.

3. The oxygen associated energy conversion device according to any one of the preceding claims, wherein said oxygen associated energy conversion device is a fuel cell and wherein said anode comprises a p-type conducting polymer.

4. The oxygen associated energy conversion device according to any one of claims 1 or 2, wherein said oxygen associated energy conversion device is an air-metal battery and wherein said anode comprises a metal or a metal composite.

5. The oxygen associated energy conversion device according to any one of the preceding claims, wherein said oxygen associated energy conversion device is provided as a film, e.g. a printed label.

6. The oxygen associated energy conversion device according to any one of the preceding claims wherein said electrolyte is a solid state electrolyte which is arranged as a membrane between said cathode and said anode.

7. An oxygen sensor, wherein said oxygen sensor comprises:

   - an oxygen associated energy conversion device according to any one of the preceding claims;
   - an indicator powered by said energy conversion device;
   wherein said energy conversion device is arranged to power said indicator when brought into contact with oxygen.

8. The oxygen sensor according to claim 7, wherein said indicator is a visible indicator or a sound indicator.

9. The oxygen sensor according to claim 7 or 8, wherein said oxygen associated energy conversion device is an air-metal battery or a fuel cell.

10. The oxygen sensor according to any one of claims 7 to 9, wherein said oxygen associated energy conversion device is provided as a printed label.

11. An air tight container comprising an oxygen sensor according to any one of claims 7 to 10 inside said container.

**Patentansprüche**

1. Sauerstoffassoziierte Energieumwandlungsvorrichtung, umfassend:

   - eine Kathode;
   - eine Anode;
   - einen Elektrolyten, der zwischen der Kathode und der Anode angeordnet ist;
   wobei die Kathode eine Luftelektrode ist, die für eine Sauerstoffreduktionsreaktion geeignet ist, und wobei die Kathode ein leitendes Polymer vom n-Typ umfasst, **dadurch gekennzeichnet, dass** das Polymer vom n-Typ Poly-Benzimidazobenzophenanthrolin, PBBL, ist.

2. Sauerstoffassoziierte Energieumwandlungsvorrichtung nach Anspruch 1, wobei das Polymer vom n-Typ Poly-Benzimidazobenzophenanthrolin, PBBL, ist, das mit einem Reduktionsmittel, z. Tetrakis(dimethylamino)ethylen, TDAE, versehen ist.

3. Sauerstoffassoziierte Energieumwandlungsvorrichtung nach einem der vorhergehenden Ansprüche, wobei die sauerstoffassoziierte Energieumwandlungsvorrichtung eine Brennstoffzelle ist und wobei die Anode ein leitendes Polymer vom p-Typ umfasst.

4. Sauerstoffassoziierte Energieumwandlungsvorrichtung nach einem der Ansprüche 1 oder 2, wobei die sauerstoffassoziierte Energieumwandlungsvorrichtung eine Luft-Metall-Batterie ist und wobei die Anode ein Metall oder einen Metallverbundstoff umfasst.

5. Sauerstoffassoziierte Energieumwandlungsvorrichtung nach einem der vorhergehenden Ansprüche, wobei die sauerstoffassoziierte Energieumwandlungsvorrichtung als Film bereitgestellt wird, z. ein gedrucktes Etikett.

6. Sauerstoffassoziierte Energieumwandlungsvorrichtung nach einem der vorhergehenden Ansprüche, wobei der Elektrolyt ein Halbleiterelektrolyt ist, der als Membran zwischen der Kathode und der Anode angeordnet ist.

7. Sauerstoffsensor, wobei der Sauerstoffsensor umfasst:

   - eine sauerstoffassoziierte Energieumwandlungsvorrichtung nach einem der vorhergehenden Ansprüche;
   - einen Indikator, der von der Energieumwandlungsvorrichtung gespeist wird, wobei die Energieumwandlungsvorrichtung so angeordnet ist, dass sie den Indikator mit Strom versorgt, wenn sie mit Sauerstoff in Kontakt gebracht wird.

8. Sauerstoffsensor nach Anspruch 7, wobei der Indikator ein sichtbarer Indikator oder ein Schallindikator ist.

9. Sauerstoffsensor nach Anspruch 7 oder 8, wobei die sauerstoffassoziierte Energieumwandlungsvorrichtung eine Luft-Metall-Batterie oder eine Brennstoffzelle ist.

10. Sauerstoffsensor nach einem der Ansprüche 7 bis 9, wobei die sauerstoffassoziierte Energieumwandlungsvorrichtung als gedrucktes Etikett bereitgestellt wird.

11. Luftdichter Behälter der einen Sauerstoffsensor nach einem der Ansprüche 7 bis 10 in dem Behälter umfasst.

**Revendications**

1. Dispositif de conversion d'énergie associé à de l'oxygène comprenant :

   - une cathode ;
   - une anode ;
   - un électrolyte disposé entre ladite cathode et ladite anode ;

   dans lequel ladite cathode est une électrode à air adaptée à une réaction de réduction de l'oxygène et dans lequel ladite cathode comprend un polymère conducteur de type n, **caractérisé en ce que** ledit polymère de type n est du poly(benzimidazobenzophénanthroline), PBBL.

**2.** Dispositif de conversion d'énergie associé à de l'oxygène selon la revendication 1, dans lequel ledit polymère de type n est du poly(benzimidazo-benzophénanthroline), PBBL, dopé avec un agent réducteur, par ex. tétrakis(diméthylamino)éthylène, TDAE.

**3.** Dispositif de conversion d'énergie associé à de l'oxygène selon l'une quelconque des revendications précédentes, dans lequel ledit dispositif de conversion d'énergie associé à de l'oxygène est une pile à combustible et dans lequel ladite anode comprend un polymère conducteur de type p.

**4.** Dispositif de conversion d'énergie associé à de l'oxygène selon l'une quelconque des revendications 1 ou 2, dans lequel ledit dispositif de conversion d'énergie associé à de l'oxygène est une batterie air-métal et dans lequel ladite anode comprend un métal ou un composite métallique.

**5.** Dispositif de conversion d'énergie associé à de l'oxygène selon l'une quelconque des revendications précédentes, dans lequel ledit dispositif de conversion d'énergie associé à de l'oxygène est fourni sous la forme d'un film, par ex. une étiquette imprimée.

**6.** Dispositif de conversion d'énergie associé à de l'oxygène selon l'une quelconque des revendications précédentes, dans lequel ledit électrolyte est un électrolyte à l'état solide qui est agencé comme une membrane entre ladite cathode et ladite anode.

**7.** Capteur d'oxygène, dans lequel ledit capteur d'oxygène comprend :

- un dispositif de conversion d'énergie associé à de l'oxygène selon l'une quelconque des revendications précédentes ;
- un indicateur alimenté par ledit dispositif de conversion d'énergie ;

dans lequel ledit dispositif de conversion d'énergie est agencé pour alimenter ledit indicateur lorsqu'il est mis en contact avec de l'oxygène.

**8.** Capteur d'oxygène selon la revendication 7, dans lequel ledit indicateur est un indicateur visible ou un indicateur sonore.

**9.** Capteur d'oxygène selon la revendication 7 ou 8, dans lequel ledit dispositif de conversion d'énergie associé à l'oxygène est une batterie air-métal ou une pile à combustible.

**10.** Capteur d'oxygène selon l'une quelconque des revendications 7 à 9, dans lequel ledit dispositif de conversion d'énergie associé à l'oxygène est fourni sous la forme d'une étiquette imprimée.

**11.** Récipient étanche à l'air comprenant un capteur d'oxygène selon l'une quelconque des revendications 7 à 10 à l'intérieur dudit récipient.

Fig. 1

Fig. 2

## Fig. 3a

## Fig. 3b

## Fig. 3c

Fig. 4

Fig. 5a

Fig. 5b

Fig. 5c

Fig. 5d

Fig. 6a

Fig. 6b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0131829 A1

- WO 8302368 A1

**Non-patent literature cited in the description**

- **YANLIANG LIANG et al.** *Journal of the American Chemical Society,* vol. 137 (15), 4956-4959
- **LI, Y. G. et al.** An oxygen reduction electrocatalyst based on carbon nanotube-graphene complexes. *Nature Nanotechnology,* 2012, vol. 7, 394-400
- **WINTHER-JENSEN, B. ; WINTHER-JENSEN, O. ; FORSYTH, M. ; MACFARLANE, D. R.** High rates of oxygen reduction over a vapor phase-polymerized PEDOT electrode. *Science,* 2008, vol. 321, 671-674
- **EMMOTT, C. J. M. ; EKINS-DAUKES, N. J. ; NELSON, J.** Dynamic carbon mitigation analysis: the role of thin-film photovoltaics. *Energy & Environmental Science,* 2014, vol. 7, 1810-1818
- **GUEYE, M. N. et al.** Structure and Dopant Engineering in PEDOT Thin Films: Practical Tools for a Dramatic Conductivity Enhancement. *Chemistry of Materials,* 2016, vol. 28, 3462-3468
- **COTTIS, P. P. et al.** Metal-free oxygen reduction electrodes based on thin PEDOT films with high electrocatalytic activity. *Rsc Advances,* 2014, vol. 4, 9819-9824
- **SINGH, S. K. ; CRISPIN, X. ; ZOZOULENKO, I. V.** Oxygen Reduction Reaction in Conducting Polymer PEDOT: Density Functional Theory Study. *Journal of Physical Chemistry C,* 2017, vol. 121, 12270-11277
- **KERR, R. ; POZO-GONZALO, C. ; FORSYTH, M. ; WINTHER-JENSEN, B.** The Reduction of Oxygen on Iron(II) Oxide/Poly(3,4-ethylenedioxythiophene) Composite Thin Film Electrodes. *Electrochimica Acta,* 2015, vol. 154, 142-148
- **WANG, S. H. et al.** Thermoelectric Properties of Solution-Processed n-Doped Ladder-Type Conducting Polymers. *Advanced Materials,* 2016, vol. 28
- **VAN DEUSEN, R. L. ; GOINS, K. ; SICREE, A.** J. Thermally Stable Polymers from 1,4,5,8-Naphthalenetetracarboxylic Acid and Aromatic Tetraamines. *Journal of Polymer Science Part A-1,* 1968, vol. 6, 1777-1793
- **LIANG, Y. L. et al.** Heavily n-Dopable pi-Conjugated Redox Polymers with Ultrafast Energy Storage Capability. *Journal of the American Chemical Society,* 2015, vol. 137, 4956-4959

- **JENEKHE, S. A. ; TIBBETTS, S. J.** Ion-implantation doping and electrical properties of high-temperature ladder polymers. *Journal of Polymer Science Part B-Polymer Physics,* 1988, vol. 26, 201-209
- **ARNOLD, F. E. ; VAN DEUSEN, R. L.** Unusual Film-Forming Properties of Aromatic Heterocyclic Ladder Polymers. *Journal of Applied Polymer Science,* 1971, vol. 15, 2035-2047
- **WAGNER, M. et al.** Characterization of Water-Dispersible n-Type Poly(benzimidazobenzophenanthroline) Derivatives. *Macromolecular Chemistry and Physics,* 2011, vol. 212, 1567-1574
- **WILBOURN, K. ; MURRAY, R. W.** Direct-current versus electronic conductivity of the ladder polymer poly(benzimidazobenzophenanthroline). *Journal of Physical Chemistry,* 1988, vol. 92, 3642-3648
- **COTER, F. et al.** Optical, magnetic resonanse and conductivity studies of the ladder polymer BBL. *Synthetic Metals,* 1989, vol. 29, E471-E476
- **KIM, O. K.** Ladder polymers as a new polymeric conductors. *Molecular Crystals and Liquid Crystals,* 1984, vol. 105, 161-173
- **LEOPOLD, D. J. ; BROWN, I. M. ; SANDRECZKI, T. C.** Electronic states induced by ion irradiation in a conjugated ladder polymer. *Synthetic Metals,* 1996, vol. 78, 67-71
- **YU, L. P. ; CHEN, M. ; DALTON, L. R.** Ladder polymers - recent developments and potential applications as electronic and optical materials. *Chemistry of Materials,* 1990, vol. 2, 649-659
- **BORNOZ, P. ; PREVOT, M. S. ; YU, X. ; GUIJARRO, N. ; SIVULA, K.** Direct Light-Driven Water Oxidation by a Ladder-Type Conjugated Polymer Photoanode. *Journal of American Chemical Society,* 2015, vol. 137, 15338-15341
- **AHONEN, H. J. ; LUKKARI, J. ; KANKARE, J.** n- and p-Doped Poly(3,4-ethylenedioxythiophene): Two Electronically Conducting States of the Polymer. *Macromolecules,* 2000, vol. 33, 6787-6793
- **HOLLIDAY, S. et al.** High-efficiency and air-stable P3HT-based polymer solar cells with a new non-fullerene acceptor. *Nature Communications,* 2016, vol. 7

- **GEOGHEGAN, M. ; HADZIIOANNOU, G.** Polymer electronics. Oxford University Press, 2013
- **BARD, A. J. ; FAULKNER, L. R.** Electrochemical Methods. Fundamentals and Applications. John Wiley and Sons, Inc, 2001, 236-238
- **MITRAKA, E. et al.** Oxygen-induced doping on reduced PEDOT. *Journal of Materials Chemistry A,* 2017, vol. 5, 4404-4412
- **LARSSON, O. ; LAIHO, A. ; SCHMICKLER, W. ; BERGGREN, M. ; CRISPIN, X.** Controlling the Dimensionality of Charge Transport in an Organic Electrochemical Transistor by Capacitive Coupling. *Advanced Materials,* 2011, vol. 23, 4764
- **CONWAY, B. E.** Electrochemical supercapacitors. Scientific Fundamentals and Technological Applications. Kluwer Academic, 1999
- **JOHANSSON, T. ; PETTERSSON, L. A. A. ; INGA-NAS, O.** Conductivity of de-doped poly(3,4-ethylenedioxythlophene). *Synthetic Metals,* 2002, vol. 129, 269-274
- **WILBOURN, K. ; MURRAY, R. W.** Electrochemical doping reactions of the conducting ladder polymer benzimidazobenzophenanthroline (BBL). *Macromolecules,* 1988, vol. 21, 89-96
- **YOHANNES, T. ; NEUGEBAUER, H. ; JENEKHE, S. A. ; SARICIFTCI, N. S.** Multiple reduction states with different conductivities of polybenzimidazobenzophenanthroline (BBL) studied with infrared spectroelectrochemistry. *Synthetic Metals,* 2001, vol. 116, 241-245
- **YOHANNES, T. et al.** In situ UV-VIS-NIR and Raman spectroelectrochemical studies of the conjugated ladder polymer polybenzimidazobenzophenanthroline (BBL). *Synthetic Metals,* 2001, vol. 119, 319-320
- **ZHENG, T. ; BADRUN, F. ; BROWN, I. M. ; LEOPOLD, D. J. ; SANDRECZKI, T. C.** Correlation of electron spin concentration and conductivity in the ladder polymer BBL as a function of electrochemical potential. *Synthetic Metals,* 1999, vol. 107, 39-45
- **FOOTE, C. S. ; VALENTINE, J. S. ; GREENBERG, A. ; LIEBMAN, J. F.** Active oxygen in chemistry. Blackie Academic & Professional, 1995
- **KERR, R. ; POZO-GONZALO, C. ; FORSYTH, M. ; WINTHER-JENSEN, B.** Influence of the Polymerization Method on the Oxygen Reduction Reaction Pathway on PEDOT. *Ecs Electrochemistry Letters,* 2013, vol. 2, F29-F31
- **DAMJANOVIC, A.** On the kinetics and mechanism of oxygen reduction at oxide film-covered Pt electrodes in acid solutions 2. Electron transfer through the oxide film and mechanism of the reduction. *Journal of the Electrochemical Society,* 1991, vol. 138, 2315-2320
- **VIGIL, J. A. ; LAMBERT, T. N. ; ELDRED, K.** Electrodeposited MnOx/PEDOT Composite Thin Films for the Oxygen Reduction Reaction. *Acs Applied Materials & Interfaces,* 2015, vol. 7, 22745-22750
- **CHOWDHURY, A. D. ; AGNIHOTRI, N. ; SEN, P. ; DE, A.** Conducting CoMn2O4-PEDOT nanocomposites as catalyst in oxygen reduction reaction. *Electrochimica Acta,* 2014, vol. 118, 81-87
- **CHOE, J. E. ; AHMED, M. S. ; JEON, S.** 3,4-Ethylenedioxythiophene functionalized graphene with palladium nanoparticles for enhanced electrocatalytic oxygen reduction reaction. *Journal of Power Sources,* 2015, vol. 281, 211-218
- **SONG, C. K. ; ECKSTEIN, B. J. ; TAM, T. L. D. ; TRAHEY, L. ; MARKS, T. J.** Conjugated Polymer Energy Level Shifts in Lithium-Ion Battery Electrolytes. *Acs Applied Materials & Interfaces,* 2014, vol. 6, 19347-19354
- **OHSAKA, T. ; WATANABE, T. ; KITAMURA, F. ; OYAMA, N. ; TOKUDA, K.** Electrocatalysis of 02 reduction at poly(ortho-phenylenediamine)- and poly(ortho-aminophenol)-coated glassy-carbon electrodes. *Journal of the Chemical Society-Chemical Communications,* 1991, 1072-1073
- **OHSAKA, T. ; WATANABE, T. ; KITAMURA, F. ; OYAMA, N. ; TOKUDA, K.** Electrocatalysis of poly(2,3-diaminonaphthalene)-filmed electrodes for reduction of oxygen. *Journal of the Chemical Society-Chemical Communications,* 1991, 487-489
- **PISAREVSKAYA, E. Y. ; NEKRASOV, A. A. ; AL-PATOVA, N. A.** Electrochemical synthesis of poly-o-phenylenediamine and its spectroelectrochemical properties. *Russian Journal of Electrochemistry,* 2004, vol. 40, 1214-1218
- **BERRY, G. C.** Properties of an optically anisotropic heterocyclic ladder polymer (BBL) in dilute solution. *Journal of Polymer Science: Polymer Symposium,* 1978, vol. 65, 143-172
- **WHITE, H. S. ; KITTLESEN, G. P. ; WRIGHTON, M. S.** Chemical derivatization of an array of 3 gold microelectrodes with polypyrrole - fabrication of a molecule-based transistor. *Journal of the American Chemical Society,* 1984, vol. 106, 5375-5377
- **CHAO, S. ; WRIGHTON, M. S.** Solid-state microelectrochemistry - electrical characteristics of a solid-state microelectrochemical transistor based on poly(3methylthiophene). *Journal of the American Chemical Society,* 1987, vol. 109, 2197-2199